# DEMANDE DE BREVET EUROPEEN

(11) **EP 1 411 257 A1**
(43) Date de publication de la demande: **21.04.2004**
(21) Numéro de dépôt: 03300154.6
(22) Date de dépôt: 14.10.2003
(51) Int. Cl.: F16D 23/04, F16D 13/28

(54) **Dispositif de couplage par cone de friction pour boîte de vitesses**

(30) Priorité: 18.10.2002 FR 0212982
(71) Demandeur: Renault s.a.s., 92100 Boulogne Billancourt (FR)
(72) Inventeur: Raoul, Michel, 78990 Elancourt (FR)

(57) **Abrégé**

Dispositif de couplage (10) d'un pignon fou (20) avec un arbre (30) d'une boîte de vitesses comportant un moyeu (40) fixé sur ledit arbre, des moyens de couplage constitués par un ensemble de synchronisation dit multi-cônes (110, 120, 130, 140 et 141) disposés entre le moyeu (40) et le pignon (20) propres à égaliser par frottement les vitesses de l'arbre (30) et du pignon (20) et de transmettre le couple par adhérence caractérisé en qu'il comporte des moyens de mise en action du coupleur constitués d'un baladeur (170) assimilé à un roulement, et de trois leviers (180) disposés radialement dans le moyeu (40) et qui transmettent la poussée du baladeur (170) à l'anneau supérieur (110) avec un effet multiplicateur d'effort.

## Description

La présente invention se rapporte aux synchroniseurs de boîtes de vitesses mécaniques.

Plus précisément, elle concerne un dispositif de couplage d'un pignon fou avec un arbre de boîte de vitesses comportant un moyeu fixe sur ledit arbre, un baladeur libre en rotation sur le moyeu, et des moyens de couplage entre le baladeur et le pignon, propres à égaliser par frottement les vitesses de l'arbre et du pignon.

Selon une disposition habituelle dans ce domaine, les synchroniseurs comportent un manchon baladeur, se déplaçant sous la commande d'une fourchette le long d'un moyeu claveté sur un arbre de boîte. Ce baladeur est muni de dents venant craboter la denture d'un pignon fou après avoir traversé celle d'un anneau de synchronisation.

Par la publication FR 2764956, on connaît un synchroniseur de type particulier, dit à « cône de frottement auto-assisté », où le baladeur ne présente pas de denture de crabotage, et où le couple transmis de l'anneau au pignon crée, grâce au contact incliné entre l'anneau et le moyeu, une poussée axiale sur les surfaces coniques de frottement en contact de l'anneau et du pignon, qui vient s'ajouter à la poussée extérieure et permanente apportée par le baladeur.

Toutefois, le synchroniseur décrit dans cette publication conserve un encombrement relativement important dès lors que les surfaces de frottement sont dimensionnées pour faire passer des couples élevés.

Par ailleurs, la poussée supplémentaire apportée par le contact incliné entre l'anneau et le moyeu est tributaire du coefficient de frottement à l'interface conique de l'anneau et du pignon et n'est pas proportionnelle à celui-ci. En conséquence, la capacité en couple transmissible n'est pas proportionnelle au coefficient de frottement. Ainsi, dans le cas où le coefficient de frottement n'est pas stable à l'usage la capacité en couple du système augmente plus vite que le coefficient de frottement, et diminue plus vite que celui-ci. Dans le cas d'une baisse du coefficient de frottement, ce qui est fréquent, la poussée du baladeur devra augmenter fortement pour compenser la baisse importante de « l'auto-assistance » du synchroniseur, et si cette poussée ne peut être fournie, le dispositif se détruit car il est dans ce cas incapable de transmettre le couple et d'empêcher le glissement relatif entre l'anneau et le pignon.

La présente invention vise d'une part à augmenter la capacité en couple d'un synchroniseur, et d'autre part à multiplier de manière constante la poussée du baladeur sur l'anneau, indépendamment du coefficient de frottement.

Un des buts recherchés par l'invention est donc que le couple transmis par le synchroniseur soit proportionnel au coefficient de frottement de ses surfaces de frottement.

Pour augmenter la capacité en couple du synchroniseur, l'invention propose que les moyens de couplage disposés entre le moyeu et le pignon soient constitués par un ensemble de synchronisation du type « multi-cônes », comportant un anneau supérieur solidaire du moyeu, un anneau intermédiaire solidaire du pignon, un anneau inférieur solidaire de l'anneau supérieur, et un cône solidaire du pignon.

Conformément à l'invention, l'anneau supérieur est solidaire du moyeu par l'intermédiaire de dents à flancs parallèles ou légèrement inclinés en forme de dièdre de façon à supprimer les frottements de contact.

L'anneau inférieur est solidaire de l'anneau supérieur par l'intermédiaire de dents à flancs parallèles à l'axe de rotation. De même, l'anneau intermédiaire et le cône sont solidaires du pignon fou par l'intermédiaire de dent à flancs parallèles.

Par ailleurs, les contacts coniques entre les anneaux sont indépendants et peuvent être différents.

Enfin, l'invention prévoit de placer trois leviers en appui sur le moyeu. Ces leviers sont orientés radialement par rapport à l'arbre, et décalés de 120° autour de celui-ci. Ils transmettent la poussée du baladeur, en amplifiant celle-ci, à un élément élastique fixé sur l'anneau supérieur.

Pour améliorer les performances d'un tel dispositif de couplage, et diminuer les dissipations d'énergie par frottement entre les cônes de synchronisation non sollicités (qui ont une incidence non négligeable sur le couple de traînée global de la transmission), l'invention prévoit également que l'anneau supérieur au repos soit repoussé vers le moyeu pour offrir un maximum d'espace aux interfaces des anneaux.

D'autres caractéristiques et avantages de l'invention apparaîtront à la lecture de la description détaillée qui suit pour la compréhension de laquelle on se reportera aux dessins annexés dans lesquels :
- la figure 1 est une coupe axiale du dispositif de synchronisation et de couplage en position repos ;
- la figure 2 est une coupe axiale du dispositif de synchronisation et de couplage en position active ;

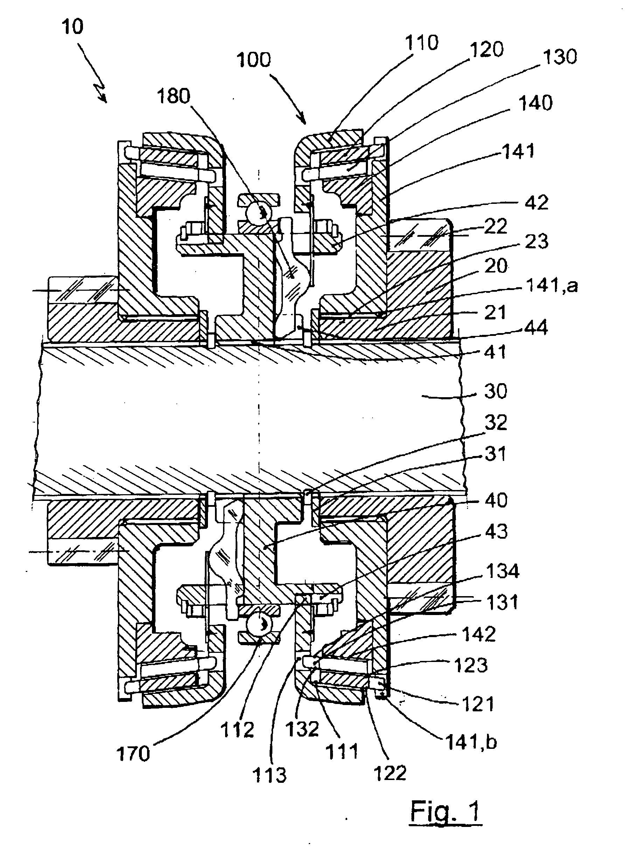

On voit sur la figure 1 l'ensemble d'un dispositif 10 pour la synchronisation et le couplage en rotation d'un pignon fou 20 à rotation sur un arbre 30 d'une boîte de vitesses de véhicule automobile (non représentée).

Le dispositif 10 présente une symétrie de conception par rapport à un plan vertical médian qui lui permet de synchroniser et de coupler de manière analogue deux pignons fous 20. La description qui suit ne porte donc que sur la partie du dispositif permettant la synchronisation et le couplage du pignon fou situé à droite mais concerne de façon analogue le pignon de gauche.

De manière connue, l'arbre 30 comporte un moyen d'arrêt axial du pignon, constitué par exemple d'une rondelle d'appui 31 et d'un jonc d'arrêt 32.

De manière connue également, le moyeu fixe 40 est entraîné en rotation par l'arbre 30 de la boîte de vitesses par l'intermédiaire d'un jeu de cannelures intérieures 41. Il est retenu axialement par rapport à l'arbre 30 par les deux joncs d'arrêt 32 situés de part et d'autre de celui-ci. Le moyeu comporte, dans sa périphérie, trois séries d'évidements 42,43 et 44. Les évidements 42, au nombre de trois répartis à 120°, sont destinés à laisser les leviers 180 traverser la paroi périphérique. Les évidements 43, en nombre quelconque sont répartis sur la périphérie extérieure, sont destinés à transmettre le couple de synchronisation ou d'entraînement au moyen de couplage par l'intermédiaire des leviers 180.

Le pignon 20 est constitué d'un fût de guidage 21 sur l'arbre, d'une denture extérieure 22 d'engrènement avec un autre pignon fixe porté par un autre arbre (non représenté) et de cannelures 23 de liaison avec les moyens de couplage.

Le moyen de couplage 100 est constitué d'un anneau conique supérieur 110 de deux anneaux coniques intermédiaires et inférieurs 120 et 130, d'un cône 140 rapporté sur un flasque 141, lui-même rapporté sur le pignon 20. Le flasque 141 est solidaire en rotation du pignon par les cannelures 141a coopérant avec les cannelures 23 du pignon, et possède à sa périphérie des évidements 141b destinés à assurer une liaison en rotation avec l'anneau intermédiaire 120. Ces évidements coopèrent avec un nombre égal d'ergots complémentaires 121 de l'anneau intermédiaire 120.

L'anneau supérieur 110 comporte un cône femelle 111 coopérant avec un cône mâle 122 de l'anneau intermédiaire 120. Il possède dans sa partie centrale des crans 112 à flancs parallèles à l'axe du cône ou faiblement inclinés d'entraînement avec le moyeu 40, qui transmettent la totalité du couple transitant dans le dispositif de couplage. Dans sa partie intermédiaire en forme de disque, il possède des évidements 113 qui reçoivent les ergots 131 de l'anneau inférieur 130.

L'anneau de couplage intermédiaire 120 possède un deuxième cône femelle 123 en regard du cône mâle 132 de l'anneau inférieur 130, et des ergots 121 pénétrant dans les évidements 141b du flasque 141.

Comme indiqué précédemment, l'anneau inférieur 130, a une surface conique mâle extérieure 132 en vis-à-vis de la surface conique femelle 123 de l'anneau intermédiaire 120, et possède des ergots 131 à flancs parallèles d'entraînement avec l'anneau supérieur 110, qui transmettent la totalité du couple transitant dans cet anneau.

Enfin, le cône 140, fixé sur le flasque 141, possède une surface conique mâle 142 en vis-à-vis de la surface conique femelle 134 de l'anneau inférieur 130.

Le dispositif décrit de façon non limitative comprend donc des anneaux dépendants dits « couplés », qui participent conjointement à la transmission globale du couple.

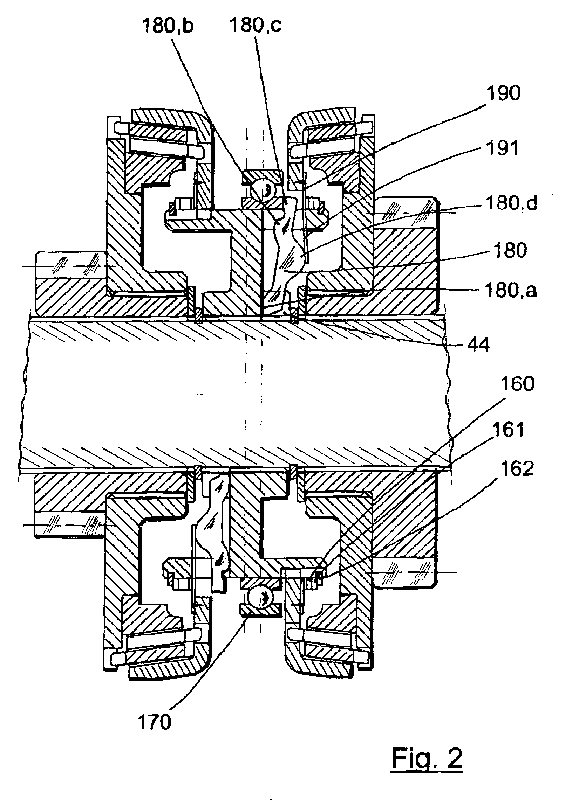

La mise en service du dispositif de couplage est illustrée par la figure 2. Elle est réalisée par le déplacement axial des anneaux et la mise en contact des surfaces coniques en vis-à-vis à l'aide d'un baladeur 170 de type roulement à billes ou à rouleaux dont le déplacement axial est obtenu par la mouvement axial d'une fourchette (non représentée) qui encercle le roulement. Cette fourchette est mise en mouvement par un dispositif de commande qui la met en liaison avec des moyens de poussée de type quelconque (non représentés). Durant toute la phase de synchronisation et ensuite pendant la transmission du couple moteur, la poussée du baladeur doit être maintenue. C'est pourquoi le baladeur est du type roulement.

La transmission de l'effort du baladeur 170 à l'anneau supérieur 110 est réalisée par l'intermédiaire de trois leviers 180 disposés à 120°, logés dans la partie centrale 44 du moyeu. Les leviers 180 possèdent quatre zones cylindriques : une première zone 180a d'appui sur le moyeu lorsque le dispositif est au repos et de pivotement lorsque le dispositif en actif, une seconde zone 180b d'appui sur le moyeu lorsque le dispositif est au repos, une troisième zone 180c d'appui du baladeur et une quatrième zone 180d d'appui sur l'anneau supérieur.

L'appui du levier sur l'anneau supérieur n'est pas direct, mais s'effectue par l'intermédiaire d'un élément souple et plat 190. Cet élément souple est une rondelle métallique pourvue de trois pattes 191 orientées vers le centre qui traversent la paroi périphérique du moyeu 40 par les évidements 42. L'élément souple 190 permet de compenser les éventuelles dispersions de fabrication des éléments constitutifs du synchroniseur, d'assurer la répartition de la poussée entre les trois leviers.

Pour remettre au repos le dispositif de couplage, il suffit d'annuler la poussée axiale du baladeur. Un dispositif d'écartement prend ensuite le relais pour le rendre amorphe en éloignant l'anneau extérieur des autres anneaux. Ce dispositif est composé d'une rondelle ondulée 160 insérée entre deux rondelles plates 161, dont la première prend appui sur le cône supérieur 110 et l'autre sur le moyeu par l'intermédiaire de l'anneau d'arrêt 162. L'anneau supérieur donc repoussé, de manière à repousser à son tour les leviers contre le moyeu.

## Revendications

1. Dispositif de couplage (10) d'un pignon fou (20) avec un arbre (30) de boîte de vitesses comportant un moyeu (40) fixé sur ledit arbre, un baladeur (170) libre en rotation sur le moyeu (40), des moyens de couplage (110, 120, 130, 140 et 141) disposés entre le baladeur (170) et le pignon (20) propres à égaliser par frottement les vitesses de l'arbre (30) et du pignon (20) puis à transmettre le couple par adhérence **caractérisé en ce que** les moyens de couplage sont constitués par un ensemble de synchronisation multi-cônes (110,120,130,140), composé d'un anneau supérieur (110) solidaire en rotation du moyeu (40) par l'intermédiaire de crans à flancs parallèles à l'axe de rotation ou faiblement inclinés, d'un anneau inférieur (130) solidaire en rotation de l'anneau supérieur (110) par l'intermédiaire de crans à flancs parallèles à l'axe de rotation, d'un anneau intermédiaire (120) et d'un cône (140) solidaires en rotation du pignon (20) par l'intermédiaire d'un flasque (141).

2. Dispositif de couplage selon la revendication 1, **caractérisé en ce qu'**il comporte des moyens de mise en action du coupleur constitués d'un baladeur (170) assimilé à un roulement, et de trois leviers (180) disposés radialement dans le moyeu (40) et qui transmettent la poussée du baladeur avec un effet multiplicateur d'effort.

3. Dispositif de couplage selon la revendication 1 ou 2, **caractérisé en ce que** les trois leviers (180) poussent sur l'anneau supérieur (110) par intermédiaire d'un élément souple (190) plat, de forme circulaire extérieure, fixé sur l'anneau supérieur et possédant trois pattes (191) radiales tournées vers l'intérieur.

4. Dispositif de couplage selon la revendication 1, 2 ou 3, **caractérisé en ce qu'**il comporte des moyens d'écartement (160, 161, 162) permettant sa mise au repos.

5. Dispositif (10) selon la revendication 4 **caractérisé en ce que** les moyens d'écartement comportent une rondelle ondulée (160) inséré entre deux rondelles plates (161), dont l'une prend appui sur le cône supérieur (110) et l'autre sur le moyeu par l'intermédiaire d'un l'anneau d'arrêt (162)

6. Dispositif de couplage selon la revendication 4 ou 5, **caractérisé en ce que** les moyens d'écartement sont disposés entre l'anneau supérieur (110) et le moyeu (40).
